# EUROPEAN PATENT SPECIFICATION

(11) **EP 2 868 563 B1**
(45) Date of publication and mention of the grant of the patent: **17.06.2020**
(21) Application number: 14191266.7
(22) Date of filing: 31.10.2014
(51) Int. Cl.: B62M 6/70, B62J 6/02, B62J 6/16

(54) **Electrically assisted bicycle**
Fahrrad mit elektrischem Hilfsmotor
Bicyclette assistée électriquement

(30) Priority: 01.11.2013 JP 2013228820
(43) Date of publication of application: 06.05.2015
(73) Proprietor: Yamaha Hatsudoki Kabushiki Kaisha, Iwata-shi, Shizuoka 438-8501 (JP)
(72) Inventor: Nozawa, Shinjiro, Iwata-shi, Shizuoka 438-8501 (JP); Katayama, Satoshi, Iwata-shi, Shizuoka 438-8501 (JP)
(74) Representative: Grünecker Patent- und Rechtsanwälte PartG mbB

(56) References cited:
- EP-A1- 2 189 359
- EP-A1- 2 599 707
- EP-A2- 1 564 122
- JP-A- 2002 274 459
- JP-A- 2010 027 575
- US-A- 3 628 085
- US-A- 3 879 617
- US-A- 4 665 321
- US-B1- 6 204 752

## Description

### BACKGROUND OF THE INVENTION

### Field of the Invention

The present invention relates to electrically assisted bicycles, and more specifically to an electrically assisted bicycle including a so called auto-light function (automatic headlight ON/OFF function) for automatically turning ON/OFF a headlight based on illumination in the surrounding environment.

### Description of the Related Art

JP-A H11-260569 discloses an automatic turning ON/OFF technique based on an amount of ambient light, using a secondary battery as a power source. In this, a main turning ON/OFF means is controlled so as to turn ON a main lighting means when a light amount detection means gives a detection value not greater than a predetermined value.

If such an automatic ON/OFF technique as in JP-A H11-260569 is applied to an electrically assisted bicycle which has a capability of turning ON/OFF its headlight based on a detection result of illumination in the surrounding environment detected by an illumination detection section, there can be a problem that the headlight will be turned ON instantaneously every time when it is recognized that surrounds is darker than a trigger level. In other words, noise can cause frequent, unintended turning ON of the headlight. For example, when an operation device is being operated, a bicycle rider's finger may pass over a light-receiving window which is provided to let light pass through to the illumination detection section. This can cause a determination that it is dark, which then leads to a sudden activation of the headlight.

Further prior art is known from document EP 2 599 707 A1, which discloses an electrically assisted bicycle including a drive assisting system, comprising: a headlight; an operation device for an operation of the drive assisting system, the operation device including an operation surface and being attached to the handlebar near to one grip. Document EP 2189359 A1 discloses a bicycle having headlight and a light-receiving window configured to allow ambient light to enter, and an illumination detection section configured to detect illumination in a surrounding environment based on the light from the light-receiving window; and a storage section configured to store a first threshold value regarding the illumination and a second threshold value regarding time; and the controller turns the headlight on if the illumination detection section gives a detection result of a value smaller than the first threshold value.

### SUMMARY OF THE INVENTION

Therefore, a primary object of the present invention is to provide an electrically assisted bicycle capable of reducing unintended activation of the headlight caused by noise, in an arrangement that the headlight is turned ON based on an illumination detection result, as well as to provide an appropriate control method. Such an object is achieved by an electrically assisted bicycle according to claim 1 and a method according to claim 8.

According to an aspect of the present teaching, there is provided an electrically assisted bicycle including a drive assisting system. The bicycle includes a headlight; an operation device for an operation of the drive assisting system, the operation device including an operation surface, a light-receiving window formed in an operation surface for allowing ambient light to enter, and an illumination detection section and configured to detect illumination in the surrounding environment based on the light from the light-receiving window; a storage section configured to store a first threshold value regarding the illumination and a second threshold value regarding time; and a controller for controlling turning ON and turning OFF of the the headlight. In this bicycle, the controller is configured to turn ON the headlight if the illumination detection section gives a detection result of a value smaller than the first threshold value for a continued time period not shorter than the second threshold value.

According to the present teaching, the headlight is not turned ON instantaneously when the detection result from the illumination detection section is smaller than the first threshold value, but the headlight is turned ON when a time for which the detection result from the illumination detection section is smaller than the first threshold value has continued for a period not shorter than the second threshold value. This can reduce a case, for example, that the headlight is turned ON instantaneously when the light-receiving window is accidentally blocked as the rider is making operation on the operation device and light becomes unable to reach the illumination detection section. Setting a Turn-ON delay time as described above makes it possible to reduce unintended turning ON of the headlight due to noise in an arrangement where the headlight is turned ON based on an illumination detection result.

Preferably, the storage section is further configured to store a third threshold value as a threshold value which regards the illumination and is greater than the first threshold value, and the controller is configured to turn OFF the headlight under a condition that the detection result of the illumination detection section is greater than the third threshold value. Specifically, the first threshold value for determination on whether or not to turn ON the headlight, and the third threshold value for determination on whether or not to turn OFF the headlight are utilized as threshold values regarding the illumination, with the third threshold value being greater than the first threshold value. In this case, the headlight is turned ON under a condition that the detection result from the illumination detection section is smaller than the first threshold value; the headlight is turned OFF under a condition that the detection result from the illumination detection section exceeds the third threshold value; and the ON/OFF state of the headlight is not changed if the detection result from the illumination detection section is not smaller than the first threshold value and not greater than the third threshold value. Therefore, once the headlight is turned ON under the condition that the detection result from the illumination detection section is smaller than the first threshold value, the headlight stays ON thereafter, until at least the detection result from the illumination detection section exceeds the third threshold value which has a greater value than the first threshold value. On the other hand, once the headlight is turned OFF under the condition that the detection result from the illumination detection section exceeds the third threshold value, the headlight stays OFF thereafter, until at least the detection result from the illumination detection section becomes smaller than the first threshold value which has a smaller value than the third threshold value. By utilizing two values as described, i.e., the first threshold value and the third threshold value which have different values from each other as threshold values regarding the illumination, it becomes possible to prevent situations that the headlight is undesirably turned ON/OFF too frequently.

Further preferably, the storage section is further configured to store a fourth threshold value regarding time, and the controller is configured to turn OFF the headlight if a time period for which the detection result from the illumination detection section exceeds the third threshold value has continued for a period not shorter than the fourth threshold value. In this case, the headlight is not turned OFF instantaneously when a detection result from the illumination detection section exceeds the third threshold value, but the headlight is turned OFF upon a lapse of time, i.e., when the time for which a detection result from the illumination detection section exceeds the third threshold value has continued for a period not shorter than the fourth threshold value. This can reduce a case, for example, that the headlight is turned OFF instantaneously when light has entered the light-receiving window and reached the illumination detection section accidentally while the rider is making operation on the operation device. Setting a Turn-OFF delay time as described above makes it possible to reduce unintended turning OFF of the headlight due to noise in an arrangement where the headlight is turned OFF based on an illumination detection result.

Further, preferably, the fourth threshold value is greater than the second threshold value. By making the fourth threshold value greater than the second threshold value as described, it becomes possible to make the delay time before the illuminating headlight is turned OFF longer than the delay time before the deactivated headlight is turned ON. Therefore, the process of bringing the illuminating headlight into OFF state can be carried out in a more prudent manner.

Preferably, the second threshold value is not shorter than 0.3 seconds. An experiment showed that in approximately 80 percent of cases where the light-receiving window is covered by a finger(s) while operating the operation device, the light-receiving window is covered by the finger(s) for a period not longer than 0.3 seconds. Thus, by making the second threshold value not shorter than 0.3 seconds, mis-activation of the headlight is avoided at a rate not lower than approximately 80%.

Further preferably, the operation device includes a plurality of operation sections. In arrangements where the operation device includes a plurality of operation sections, the rider is likely to move his/her finger(s) over a larger area, and it becomes more likely that the finger(s) will cover the light-receiving window and make noise. Since the present teaching is capable of reducing unintended turning ON of the headlight due to noise, it can be applied suitably when the operation device includes a plurality of operation sections.

Further, preferably, at least one of the operation sections includes an input section for an inputting operation performed while the bicycle is moving, and the light-receiving window is near the input section. If the light-receiving window is placed near any input section which is likely to be used during a ride on the bicycle, then it becomes more likely that the noise will be caused by the rider's finger(s) covering the light-receiving window. Since the present teaching is capable of reducing unintended turning ON of the headlight due to noise, it can be utilized suitably when the light-receiving window is near any input section which tends to be used during a ride on the bicycle.

The operation device is attached to a handlebar. In arrangements where the operation device is attached to the handlebar as described, it is desirable that the operation device is small. In this case, the light-receiving window is formed within a small operation surface, so it becomes more likely that the finger(s) will cover the light-receiving window and make noise. Since the present teaching is capable of reducing unintended turning ON of the headlight due to noise, it can be utilized suitably when the operation device is attached to the handlebar.

According to another aspect of the present teaching, there is also provided a method of controlling a headlight included in an electrically assisted bicycle, wherein the method comprises the steps of detecting illumination in a surrounding environment, comparing the detected illumination with a first threshold value, and turning ON a headlight if the detected illumination has a value smaller than the first threshold value for a continued time period not shorter than a second threshold value.

The step of detecting illumination in a surrounding environment includes the steps of allowing ambient light to enter a light-receiving window formed in an operation surface of an operation device of the electrically assisted bicycle, and detecting illumination in a surrounding environment based on the light from the light-receiving window with an illumination detection section of the operation device.

Further preferably, the step of comparing the detected illumination with the first threshold value involves comparing the detected illumination with a first threshold value stored in a storage section of the operation device.

More preferably, the step of turning ON the headlight involves a controller turning ON the headlight if the illumination detection section gives a detection result of a value smaller than the first threshold value for a continued time period not shorter than the second threshold value, which is also stored in the storage section.

The method of the present teaching more preferably comprises the step of turning OFF the headlight with the controller under a condition that the detection result of the illumination detection section is greater than a third threshold value, which is stored in the storage section:
The method of the present teaching even more preferably comprises the step of turning OFF the headlight with the controller if a time period for which the detection result from the illumination detection section exceeds the third threshold value continues for a time period not shorter than a fourth threshold value, which is stored in the storage section, wherein the fourth threshold value is preferably greater than the second threshold value.

In the method of the present teaching, the second threshold value is preferably not shorter than 0.3 seconds.

The above-described object and other objects, characteristics, aspects and advantages of the present invention will become clearer from the following detailed description of embodiments of the present invention to be made with reference to the attached drawings.

### BRIEF DESCRIPTION OF THE DRAWINGS

Fig. 1 is a right-hand side view of an electrically assisted bicycle according to an embodiment of the present invention.
Fig. 2 is a block diagram showing primary constituent parts of the electrically assisted bicycle in Fig. 1.
Fig. 3 is an illustrative drawing showing a handlebar of the electrically assisted bicycle in Fig. 1 and surroundings thereof.
Fig. 4 is a partially unillustrated plan view showing the handlebar and a display/operation device.
Fig. 5 is a partially unillustrated rear view showing the handlebar and the display/operation device.
Fig. 6 an illustrative drawing showing a section taken in lines I-I in Fig. 4.
Fig. 7 is an illustrative drawing of the handlebar and the display/operation device.
Fig. 8 is a flowchart showing an operation example of the electrically assisted bicycle in Fig. 1 when a headlight is in its OFF state.
Fig. 9 is a flowchart showing an operation example of the electrically assisted bicycle in Fig. 1 when the headlight is in its ON state.
Fig. 10 is an illustrative drawing showing an ON/OFF operation example of the headlight in the electrically assisted bicycle in Fig. 1.
Fig. 11 is a graph which shows a relationship between a second threshold value for turning ON the headlight and a headlight mis-activation ratio according to the electrically assisted bicycle in Fig. 1.

### DETAILED DESCRIPTION OF THE PREFERRED EMBODIMENTS

Hereinafter, preferred embodiments of the present invention will be described with reference to the drawings.

It is noted that the terms left and right, front and rear, up and down as used in the embodiments of the present invention are determined from the bicycle rider's position on a saddle 50 of an electrically assisted bicycle 10, with the rider facing toward a handlebar 32.

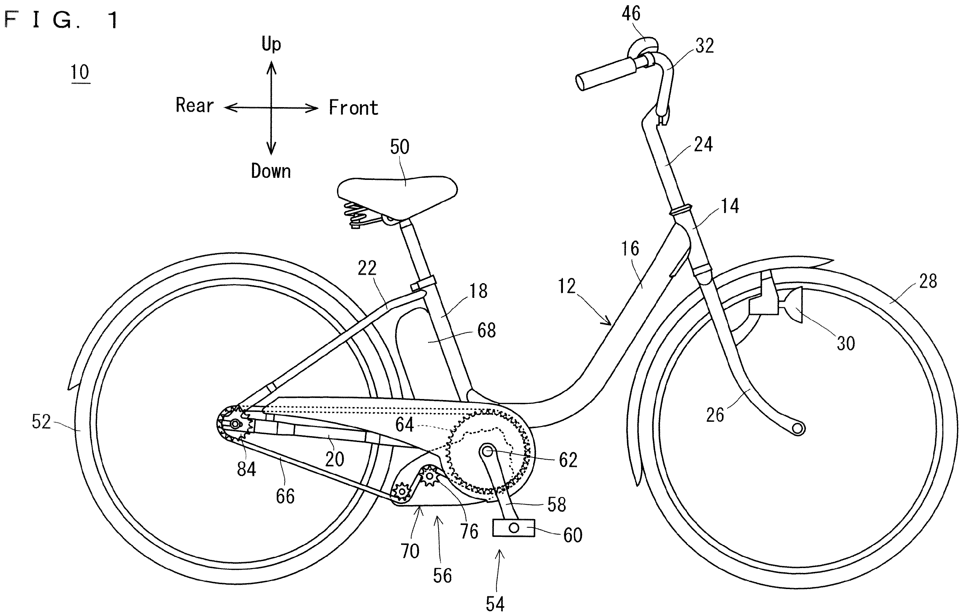

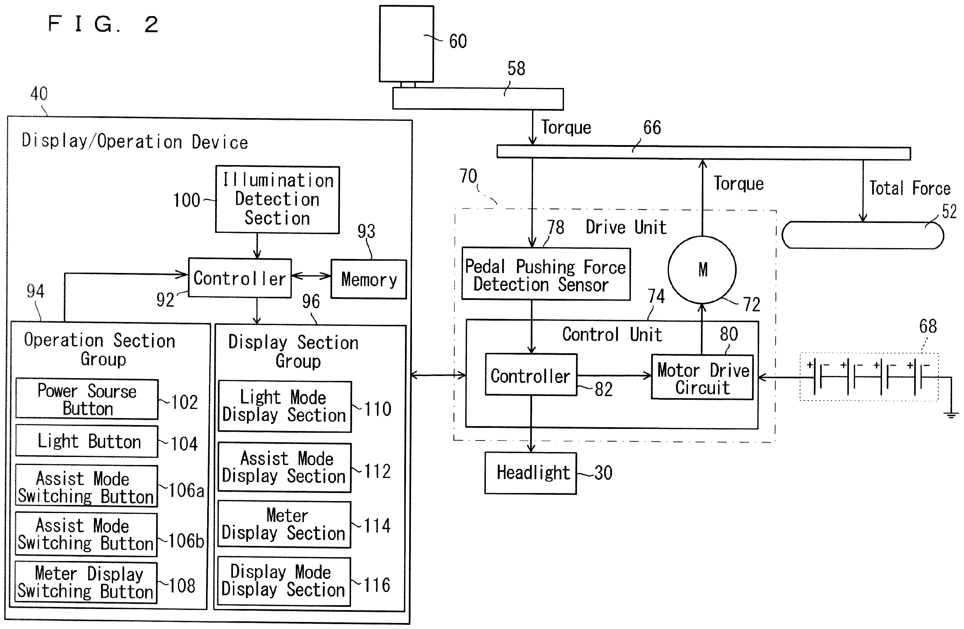

Referring to Fig. 1 and Fig. 2, an electrically assisted bicycle 10 as a saddle type vehicle according to an embodiment of the present invention is a standard-type electrically assisted bicycle, and includes a body frame 12. The body frame 12 includes a head pipe 14; a down tube 16 extending from the head pipe 14 in an obliquely rearward and downward direction; a saddle tube 18 extending from a rear end of the down tube 16 in an obliquely rearward and upward direction; a left-and-right pair of chain stays 20 extending rearward from near a lower end of the saddle tube 18 in a substantially horizontal direction; and a left-and-right pair of saddle stays 22 which connect rearward end portions of the two chain stays 20 to an upper region of the saddle tube 18.

The head pipe 14 supports a stem 24 pivotably in a clockwise/counterclockwise direction. The stem 24 has a lower end, where a front fork 26 is provided, and at a lower end of the front fork 26, a front wheel 28 is supported rotatably. The front fork 26 supports a headlight 30. At an upper end of the stem 24, there is a handlebar 32.

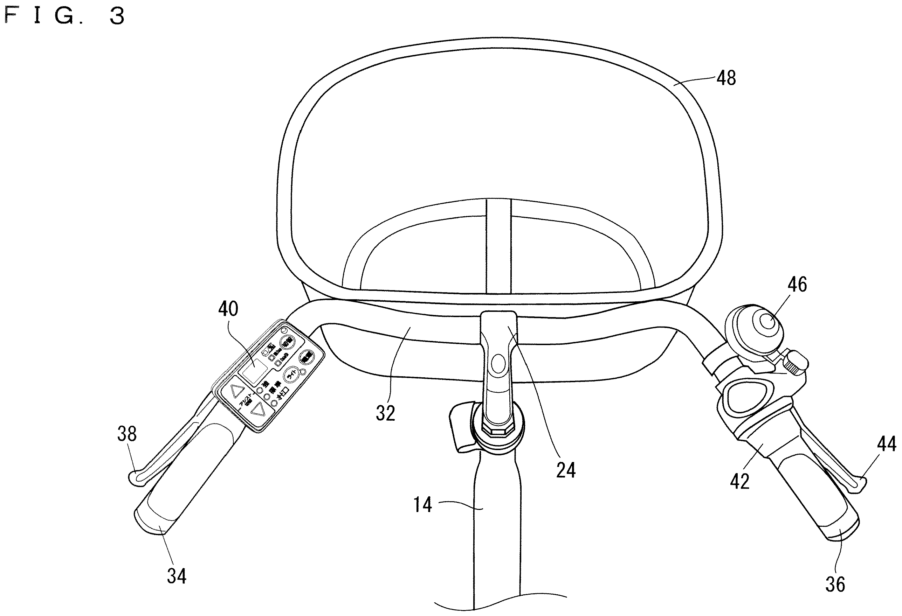

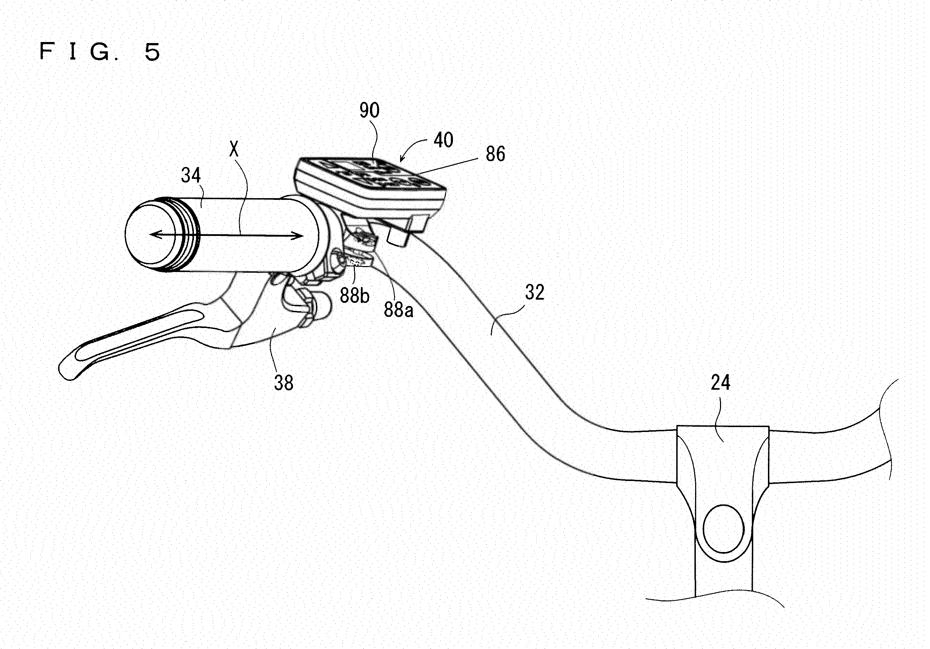

Referring to Fig. 3 through Fig. 5, the handlebar 32 extends substantially horizontally from the stem 24, in two directions (left and right directions) along a width direction of the bicycle, and then obliquely upward and thereafter, opens slightly in obliquely rearward directions. The handlebar 32 has a left end portion and a right end portion, provided with grips 34, 36 respectively. In a left portion of the handlebar 32, near an end portion of the grip 34 closer to the stem, a rear wheel brake lever 38 and a display/operation device 40 are attached in this order. In a right portion of the handlebar 32, near an end portion of the grip 36 closer to the stem, a speed change grip 42, a front wheel brake lever 44 and a bell 46 are attached in this order. In front of the handlebar 32, a basket 48 is provided.

Returning to Fig. 1 and Fig. 2, a saddle 50 is attached to an upper end of the saddle tube 18. The saddle 50 is at a more rearward position than the handlebar 32. A rear wheel 52 is supported rotatably at rear ends of the chain stays 20.

The electrically assisted bicycle 10 includes a man-force driving system 54 and a drive assisting system 56.

The man-force driving system 54 includes crank arms 58; pedals 60 each attached to respective ends of the crank arms 58; a crank shaft 62 provided at other ends of the crank arms 58; and a drive sprocket 64 attached to the crank shaft 62. As the bicycle rider pushes the pedals 60, a pedal pushing force (torque) is supplied to a chain 66 via the crank arms 58, the crank shaft 62 and the drive sprocket 64.

The drive assisting system 56 includes a battery 68 placed between the saddle tube 18 and a front edge of the rear wheel 52; and a drive unit 70. The drive unit 70 includes an electric motor 72; a control unit 74; an assisting sprocket 76; and a pedal pushing force detection sensor 78. The electric motor 72 is placed behind the crank shaft 62. The control unit 74 is attached to the body frame 12. The assisting sprocket 76 is attached to the electric motor 72, and is engaged with the chain 66. The pedal pushing force detection sensor 78 is placed between the crank shaft 62 and the drive sprocket 64 to detect the pedal pushing force (torque) the rider supplies to the crank shaft 62.

The control unit 74 includes a motor drive circuit 80 for driving the electric motor 72, and a controller 82. The controller 82 includes a CPU for example, and performs signal communication with a controller 92 (to be described later) of the display/operation device 40, thereby controlling the motor drive circuit 80 and the headlight 30. The controller 82 receives a pedal pushing force detection signal from the pedal pushing force detection sensor 78, and signals from assist mode switching buttons 106a, 106b (to be described later). The controller 82 uses the inputted signals and a control map stored in the controller 82, to calculate a required assisting force, and outputs a motor control signal (for example, PWM output) according to the calculated assisting force to the motor drive circuit 80. The motor drive circuit 80 provides drive control on a drive motor 72 based on the motor control signal, whereby the calculated assisting force is supplied to the chain 66 via the assisting sprocket 76.

The chain 66 is wound around the drive sprocket 64 attached to the crank shaft 62, and around the driven sprocket 84 attached to the rear wheel 52. A total force of the pedal pushing force and the assisting force supplied to the chain 66 is then transferred to the rear wheel 52 via the driven sprocket 84, whereby the rear wheel 52 is rotated.

Description will now cover the display/operation device 40.

As mentioned above, the display/operation device 40 is attached to near the left-hand grip 34 on the handlebar 32. In other words, the display/operation device 40 is disposed at a position which allows the rider to operate an operation section group 94 (to be described later) with his/her left hand fingers while his/her left hand is still on the grip 34 or while the left hand, holding on the grip 34, is slightly lifted therefrom.

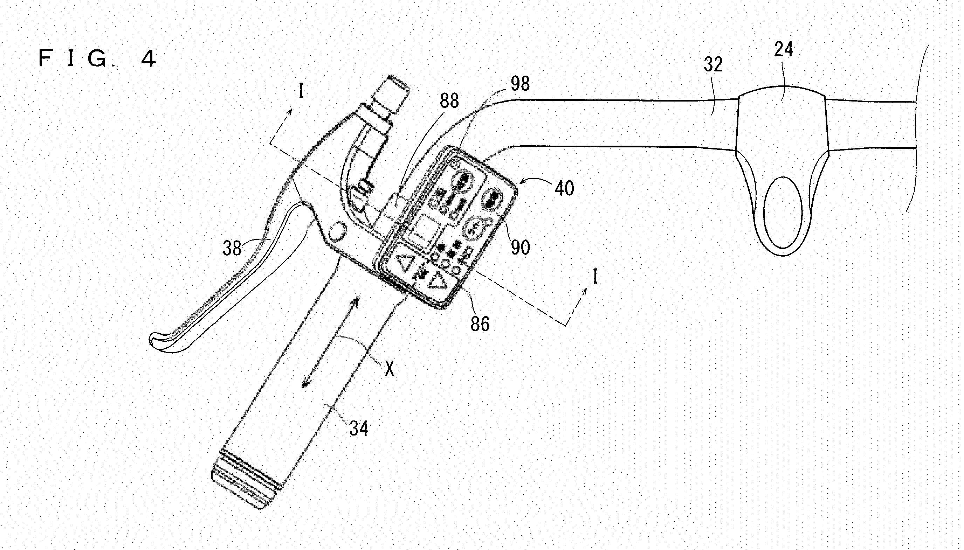

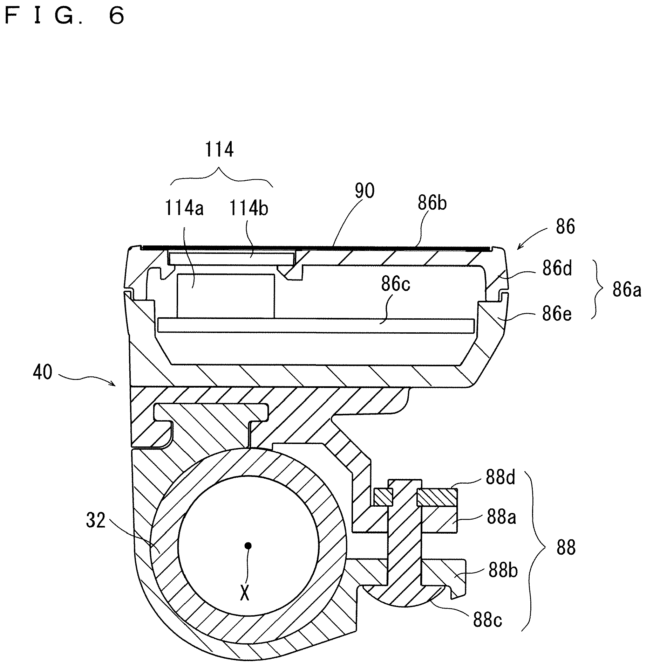

Referring to Fig. 4 through Fig. 6, the display/operation device 40 includes a device main body 86 and a mounting portion 88. The mounting portion 88 is generally annular, provided on the device main body 86, and is attached to the handlebar 32 so as to hold an outer circumferential surface of the handlebar 32. The mounting portion 88 has an upper member 88a; a lower member 88b; and a bolt 88c and a nut 88d as fasteners to connect the upper member 88a and the lower member 88b to each other. The upper member 88a is attached to a lower surface of a case lower portion 86e (to be described later) of the device main body 86. In the present embodiment, the upper member 88a and the case lower portion 86e are formed integrally with each other. The upper member 88a and the lower member 88b are fitted to each other at their first end regions while their second end regions are fastened to each other with the bolt 88c and the nut 88d. The lower member 88b is made of an elastic material for example, and is fitted around the handlebar 32 in an outer circumferential direction of the handlebar 32, to surround approximately 3/4 of the outer circumference (see Fig. 6). An approximate 1/4 of the outer circumference of the handlebar 32 which is not surrounded by the lower member 88b is surrounded by the upper member 88a. As described, the upper member 88a and the lower member 88b surround the outer circumferential surface of the handlebar 32 in the outer circumferential direction, and under this state the upper member 88a and the lower member 88b are fastened together with the bolt 88c and the nut 88d, whereby the device main body 86 (the display/operation device 40) is attached to the handlebar 32.

The device main body 86 is substantially platy and rectangular. Referring to Fig. 6, the device main body 86 includes a case 86a, a protection sheet 86b, and a substrate 86c. The case 86a includes a case upper portion 86d and a case lower portion 86e fitted to the case upper portion 86d. The protection sheet 86b is placed on the case upper portion 86d. The substrate 86c is inside the case 86a. Fig. 6 shows an arrangement inside the case 86a in a simplified fashion. Also, in Fig. 6, an axial direction X is a direction vertically penetrating the paper.

Referring also to Fig. 2, the device main body 86 further includes an operation surface 90, a controller 92, a memory 93 as a storage section, an operation section group 94 for operating the drive assisting system 56, a display section group 96 for displaying various information, a light-receiving window 98 for letting ambient light enter, and an illumination detection section 100 for detecting illumination in the surrounding environment based on the light from the light-receiving window 98.

The operation surface 90 does not face the handlebar 32. Specifically, the operation surface 90 is formed in an upper surface of the protection sheet 86b, to face upward. The operation surface 90 is substantially rectangular, and has an approximate size of a business card. The operation section group 94 is operable (by touching) on the operation surface 90. The display section group 96 is visible in the operation surface 90. The light-receiving window 98 is in the operation surface 90 of the device main body 86. The controller 92, the memory 93 and the illumination detection section 100 is provided on the substrate 86c inside the case 86. The memory 93, the operation section group 94, the display section group 96 and the illumination detection section 100 are electrically connected to the controller 92.

The controller 92 includes a CPU for example, and controls an operation of the display/operation device 40. Also, the controller 92 performs signal communications with the controller 82 of the control unit 74 as described above.

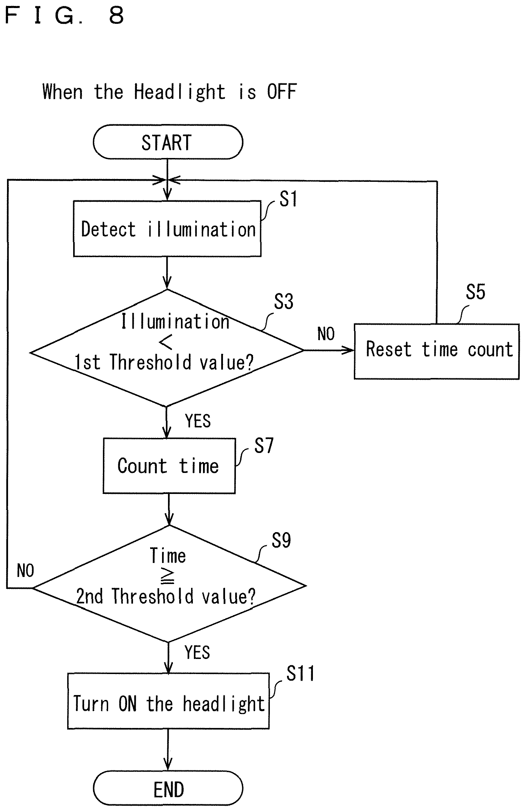

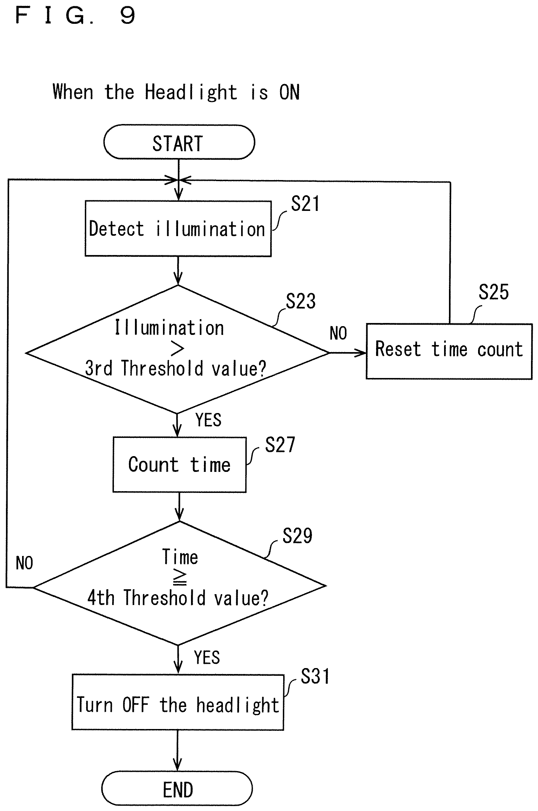

The memory 93 stores programs and data for controlling operations of the display/operation device 40 and the headlight 30. For example, the memory 93 stores a program regarding an operation shown in Fig. 8, for a period when the headlight 30 is turned OFF; a program regarding an operation shown in Fig. 9, for a period when the headlight 30 is turned ON, and a first through a fourth threshold values. The first threshold value and the third threshold value relate to illumination. The first threshold value relates to illumination in the surrounding environment for turning ON the headlight 30 from OFF state. The third threshold value relates to illumination in the surrounding environment for turning OFF the headlight 30 from ON state. The second threshold value and the fourth threshold value relate to time. The second threshold value indicates a time duration (Turn-ON delay time) from a moment when a detection result from the illumination detection section 100 becomes smaller than the first threshold value to a moment when the headlight 30 is turned ON. The fourth threshold value indicates a time duration (Turn-OFF delay time) from a moment when a detection result from the illumination detection section 100 exceeds the third threshold value to a moment when the headlight 30 is turned OFF. The first threshold value is smaller than the third threshold value. The second threshold value is smaller than the fourth threshold value. The second threshold value is preferably not shorter than 0.3 seconds. In the present embodiment, the first threshold value is set to 660 lux, the third threshold value is set to 2000 lux, the second threshold value is set to 0.3 seconds, and the fourth threshold value is set to 5 seconds.

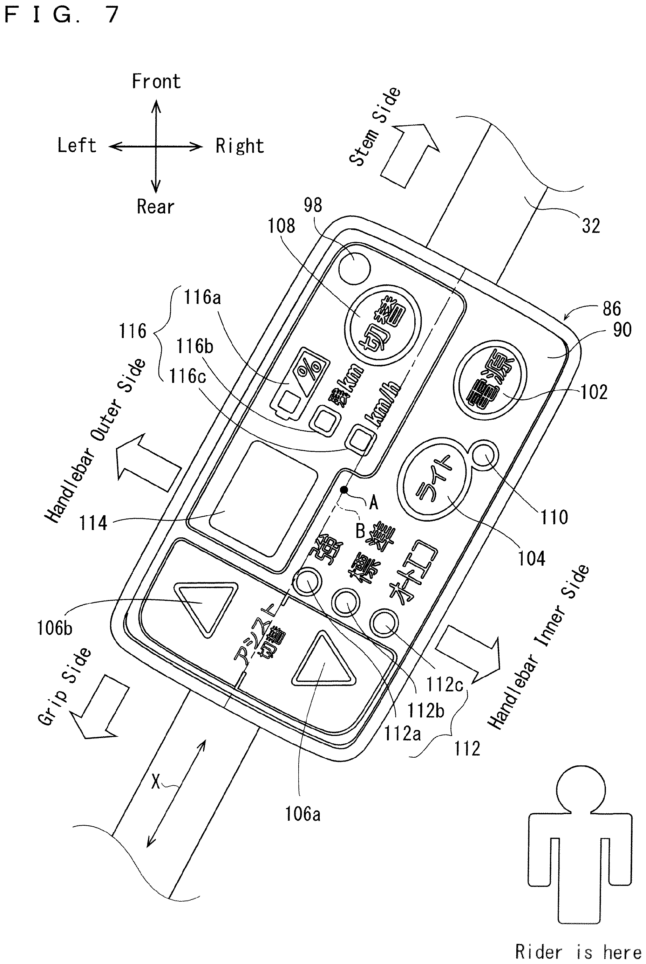

Referring also to Fig. 7, the operation section group 94 includes a plurality of operation sections, specifically, a power source button 102 to be turned ON/OFF by the rider, a light button 104, assist mode switching buttons 106a, 106b, and a meter display switching button 108. In the operation surface 90 of the device main body 86, the power source button 102 is disposed on a side closer to the stem, near a corner on an inner side of the handlebar. The light button 104 is disposed next to the power source button 102, on a side closer to the grip. The assist mode switching button 106a is disposed on a side closer to the grip, on the inner side of the handlebar in the operation surface 90 of the device main body 86, whereas the assist mode switching button 106b is disposed on an outer side of the assist mode switching button 106a with respect to the handlebar. In the operation surface 90 of the device main body 86, the meter display switching button 108 is disposed on a side closer to the stem, near a corner on the outer side of the handlebar. In the present embodiment, all of the power source button 102, the light button 104, the assist mode switching buttons 106a, 106b and the meter display switching button 108 function as input sections operable while the bicycle is moving.

The display section group 96 includes a plurality of display sections; specifically, a light mode display section 110, an assist mode display section 112, a meter display section 114 and a display mode display section 116. The light mode display section 110 is disposed in a vicinity of the light button 104. The assist mode display section 112 includes a powerful mode display section 112a, a standard mode display section 112b, and an auto-economy mode display section 112c, and is disposed between the assist mode switching button 106a and the light button 104. The meter display section 114 is disposed near the assist mode switching button 106b on a side closer to the stem, near the assist mode display section 112 on the outer side of the handlebar. The display mode display section 116 indicates a type of information displayed in the meter display section 114, includes a remaining battery charge display section 116a, a distance-to-empty display section 116b, and a traveling speed display section 116c, and is disposed between the meter display section 114 and the meter display switching button 108. Referring to Fig. 6, the meter display section 114 includes an LED display section 114a composed, for example, of a plurality of 7-segment LEDs; and a cover lens 114b of a strip-shape for example. The LED display section 114a is on the substrate 86c, whereas the cover lens 114b is between the LED display section 114a and the protection sheet 86b. Also, each of the light mode display section 110, the powerful mode display section 112a, the standard mode display section 112b, the auto-economy mode display section 112c, the remaining battery charge display section 116a, the distance-to-empty display section 116b and the traveling speed display section 116c has an LED (not illustrated) which is disposed on the substrate 86c and is visible in the operation surface 90.

When the power source button 102 is turned ON, the device enters the auto-light mode first, where the headlight 30 is automatically turned ON/OFF based on illumination in the surrounding environment. If the light button 104 is pressed thereafter, the device enters the manual-light mode. In the manual-light mode, the headlight 30 is switched to ON/OFF each time the light button 104 is pressed. Thereafter, the manual-light mode continues until the power source button 102 is turned OFF. The light mode display section 110 turns ON when the headlight 30 is ON, and turns OFF while the headlight 30 is OFF.

By operating the assist mode switching buttons 106a, 106b, it is possible to switch the assist mode between "powerful mode" in which powerful assistance is provided, "standard mode" in which power and mileage are balanced, "auto-economy mode" in which power saving is prioritized for longer mileage, and "no assistance mode". In accordance with the selection performed, one of the powerful mode display section 112a, the standard mode display section 112b, and the auto-economy mode display section 112c turns ON or all of them turn OFF, to indicate the assist mode selected at that moment. A drive force provided by the electric motor 72 becomes smaller in the order of "powerful mode", "standard mode" and "auto-economy mode", with the pedal pushing force being equal.

By operating the meter display switching button 108, meter display in the meter display section 114 is switched between remaining battery charge, current distance-to-empty, and traveling speed. In accordance with the selection performed, one of the remaining battery charge display section 116a, the distance-to-empty display section 116b and the traveling speed display section 116c turns ON, to indicate the display mode at that moment.

Referring to Fig. 4 through Fig. 7, the light-receiving window 98 is on a side closer to the stem than is a center-of-gravity point A of the operation surface 90 (geographic center of gravity of the operation surface 90) in the axial direction X of the handlebar 32 at a place where the mounting portion 88 is attached. Also, when viewed from a direction vertical to the operation surface 90, the light-receiving window 98 and the saddle 50 (see Fig. 1) are on mutually opposed sides of an imaginary line segment B which is drawn to pass through the center-of-gravity point A and to extend in the axial direction X of the handlebar 32 at the mounting portion 88. Further, at least part of the light-receiving window 98 is on a side closer to the stem than is the operation section group 94, i.e., than is the power source button 102 and the meter display switching button 108. In the present embodiment, the light-receiving window 98 is located in a vicinity of the meter display switching button 108. In other words, the light-receiving window 98 is formed at a corner region in the operation surface 90. The illumination detection section 100 is placed at a position accessible by light from the light-receiving window 98, typically, on a line which passes through the light-receiving window 98 and is vertical to the operation surface 90.

In the present embodiment, the controllers 82 and 92 represent the controller to turn ON/OFF the headlight 30.

Next, reference will be made to Fig. 8 and Fig. 9, to describe an operation example of the electrically assisted bicycle 10 in the auto-light mode.

Referring to Fig. 8, description will cover an operation of the electrically assisted bicycle 10 when the headlight 30 is in its OFF state.

First, based on light from the light-receiving window 98 in the display/operation device 40, the illumination detection section 100 detects an illumination in the surrounding environment (Step S1). The controller 92 determines whether or not the ambient illumination detected by the illumination detection section 100 is smaller than the first threshold value (Step S3). If the ambient illumination detected by the illumination detection section 100 is not smaller than the first threshold value, the controller 92 determines that it is not necessary to turn ON the headlight 30, resets a time count (Step S5), and returns to Step S1.

On the other hand, if the controller 92 determines that the ambient illumination detected by the illumination detection section 100 is smaller than the first threshold value in Step S3, time counting is started (Step S7). Specifically, a counting is made for a time duration for which the detection result from the illumination detection section 100 continues to be smaller than the first threshold value. The controller 92 determines whether or not the time duration is not smaller than the second threshold value (Step S9). If the time duration is smaller than the second threshold value, the process returns to Step S1. On the other hand, if the time duration is not smaller than the second threshold value, the controller 92 sends a signal to the controller 82 of the control unit 74 to turn ON the headlight 30, and in response to the signal, the controller 82 turns ON the headlight 30 (Step S11).

Next, reference will be made to Fig. 9, to describe an operation of the electrically assisted bicycle 10 when the headlight 30 is in its ON state.

First, based on light from the light-receiving window 98 in the display/operation device 40, the illumination detection section 100 detects an illumination in the surrounding environment (Step S21). The controller 92 determines whether or not the ambient illumination detected by the illumination detection section 100 is greater than the third threshold value (Step S23). If the ambient illumination detected by the illumination detection section 100 is not greater than the third threshold value, the controller 92 determines that it is not necessary to turn OFF the headlight 30, resets a time count (Step S25), and returns to Step S21.

On the other hand, if the controller 92 determines that the ambient illumination detected by the illumination detection section 100 is greater than the third threshold value in Step S23, time counting is started (Step S27). Specifically, a counting is made for a time duration for which the detection result from the illumination detection section 100 continues to be greater than the third threshold value. The controller 92 determines whether or not the time duration is not smaller than the fourth threshold value (Step S29). If the time duration is smaller than the fourth threshold value, the process returns to Step S21. On the other hand, if the time duration is not smaller than the fourth threshold value, the controller 92 sends a signal to the controller 82 of the control unit 74 to turn OFF the headlight 30, and in response to the signal, the controller 82 turns OFF the headlight 30 (Step S31).

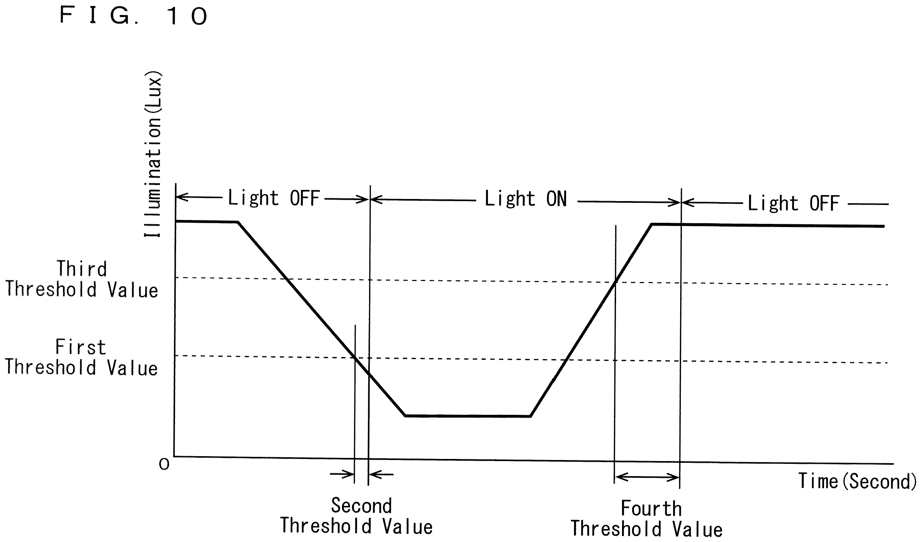

By operating the electrically assisted bicycle 10 in such a fashion as described, the headlight 30 turns ON/OFF in a pattern, for example, shown in Fig. 10.

According to the electrically assisted bicycle 10, the headlight 30 is not turned ON instantaneously when a detection result from the illumination detection section 100 is smaller than the first threshold value, but the headlight 30 is turned ON when a time for which the detection result from the illumination detection section 100 is smaller than the first threshold value has continued for a period not smaller than the second threshold value. This can reduce a case, for example, that the headlight 30 is turned ON instantaneously when the light-receiving window 98 is accidentally blocked as the rider is making operation on the display/operation device 40 and light becomes unable to reach the light illumination detection section 30. Setting a Turn-ON delay time as described above makes it possible to reduce unintended turning ON of the headlight 30 caused by noise, in an arrangement where the headlight 30 is turned ON based on an illumination detection result.

Two kinds of illumination-related threshold values are employed, i.e., the first threshold value for determination on whether or not to turn ON the headlight 30, and the third threshold value for determination on whether or not to turn OFF the headlight 30, with the third threshold value being greater than the first threshold value. In this case, the headlight 30 is turned ON under a condition that the detection result from the illumination detection section 100 is smaller than the first threshold value; the headlight 30 is turned OFF under a condition that the detection result from the illumination detection section 100 exceeds the third threshold value; and the ON/OFF state of the headlight 30 is not changed if the detection result from the illumination detection section 100 is not smaller than the first threshold value and not greater than the third threshold value. Therefore, once the headlight 30 is turned ON under the condition that the detection result from the illumination detection section 100 is smaller than the first threshold value, the headlight 30 stays ON thereafter, until at least the detection result from the illumination detection section 100 exceeds the third threshold value which has a greater value than the first threshold value. On the other hand, once the headlight 30 is turned OFF under the condition that the detection result from the illumination detection section 100 exceeds the third threshold value, the headlight 30 stays OFF thereafter, until at least the detection result from the illumination detection section 100 becomes smaller than the first threshold value which has a smaller value than the third threshold value. By utilizing two values, i.e., the first threshold value and the third threshold value which have different values from each other as threshold values regarding the illumination, it becomes possible to prevent situations that the headlight 30 is unintentionally turned ON/OFF too frequently. This makes it possible to reduce incidental turning ON or OFF of the headlight 30 due to noise.

The headlight 30 is not turned OFF instantaneously when a detection result from the illumination detection section 100 exceeds the third threshold value, but the headlight 30 is turned OFF after a lapse of time, i.e., when the time for which the detection result from the illumination detection section 100 exceeds the third threshold value has continued for a period not shorter than the fourth threshold value. This can reduce a case that the headlight 30 is turned OFF instantaneously when, for example, there is an accidental entry of light into the light-receiving window 98 to feed the illumination detection section 100 while the rider is making operation on the display/operation device 40. Setting a Turn-OFF delay time as described above makes it possible to reduce unintended turning OFF of the headlight 30 caused by noise, in an arrangement where the headlight 30 is turned OFF based on an illumination detection result. Also, by utilizing the fourth threshold value regarding the time for turning OFF the light, it becomes possible to reduce influences from big noises which cannot be avoided by a difference between the two illumination-related threshold values (the first threshold value and the third threshold value).

The fourth threshold value is greater than the second threshold value, whereby the delay time before the illuminating headlight 30 is turned OFF is made longer than the delay time before the deactivated headlight 30 is turned ON. Therefore, the process of bringing the illuminating headlight 30 into OFF state can be carried out in a more prudent manner.

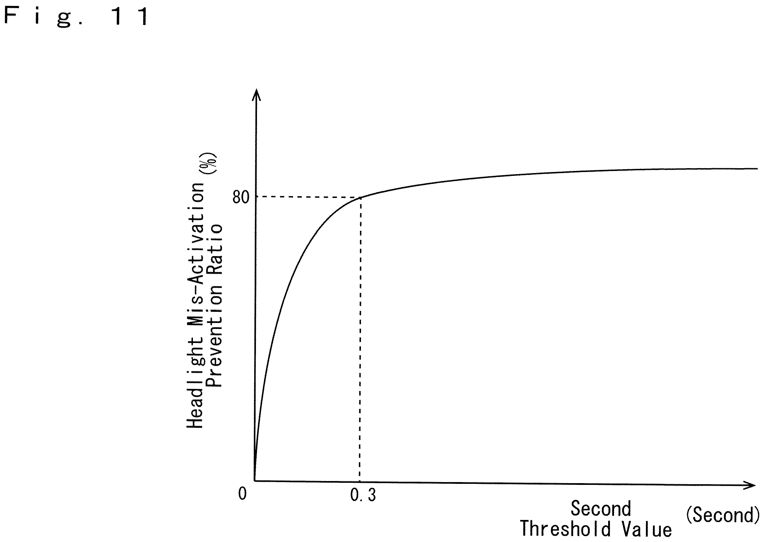

An experiment showed that in approximately 80 percent of cases where the light-receiving window 98 is covered by a finger(s) while operating the display/operation device 40, the light-receiving window 98 is covered by the finger(s) for a period not longer than 0.3 seconds. Fig. 11 shows a relationship between the second threshold value and mis-activation prevention ratio of the headlight 30. Referring to Fig. 11, since the second threshold value is not shorter than 0.3 seconds in the electrically assisted bicycle 10, mis-activation of the headlight 30 is avoided at a rate not lower than approximately 80%.

In arrangements where the display/operation device includes a plurality of operation sections, the rider is likely to move his/her finger(s) over a larger area, and it becomes more likely that the finger(s) will cover the light-receiving window and make noise. Since the electrically assisted bicycle 10 is capable of reducing unintended turning ON of the headlight 30 due to noise, it can be used suitably when the display/operation device 40 includes a plurality of operation sections.

If the light-receiving window is near any input section which is likely to be used during a ride on the bicycle, then it becomes more likely that the noise will be caused when the rider's finger(s) happen to cover the light-receiving window. Since the electrically assisted bicycle 10 is capable of reducing unintended turning ON of the headlight 30 due to noise, it can be used suitably when the light-receiving window 98 is near any input section which is likely to be used during a ride on the bicycle.

In arrangements where the display/operation device is attached to the handlebar, it is desirable that the display/operation device is small. In this case, the light-receiving window is formed within a small operation surface, so it becomes more likely that the finger(s) will cover the light-receiving window and make noise. Since the electrically assisted bicycle 10 is capable of reducing unintended turning ON of the headlight 30 due to noise, it can be used suitably when the display/operation device 40 is attached to the handlebar 32.

In the embodiment described above, description was made for a case of utilizing four threshold values, i.e., the first threshold value through the fourth threshold value. However, the present invention is not limited to this, but is acceptable if at least the first threshold value and the second threshold value are utilized.

Hereinafter, description will cover embodiments where the fourth threshold value is not used.

### (1) The First Threshold Value through the Third Threshold Value are Used But the Fourth threshold Value is Not Used

In this embodiment, the headlight 30 turns OFF when the detection result from the illumination detection section 100 exceeds the third threshold value, whereas the headlight 30 turns ON when a time for which the detection result from the illumination detection section 100 is smaller than the first threshold value continues for a time period not shorter than the second threshold value.

In this case, it may happen that the headlight 30 is turned OFF momentarily by a strong noise such as a bright street lamp. However, the headlight 30 turns ON once the time for which the detection result from the illumination detection section 100 is smaller than the first threshold value has continued for a time period not shorter than the second threshold value. For example, during a night ride on a dark road, light from a street lamp may hit the illumination detection section 100. Then, the headlight will turn OFF momentarily, but due to a nature of night ride where surrounds are mostly dark, the headlight 30 will turn ON once a predetermined time has elapsed.

### (2) The First Threshold Value through the Third Threshold Value, and a Fifth Threshold Value Regarding Time are Used

In this embodiment, the headlight 30 turns OFF when the detection result from the illumination detection section 100 exceeds the third threshold value. However, if the detection result from the illumination detection section 100 becomes smaller than the first threshold value within a predetermined time (the fifth threshold value) from the de-activation of the headlight 30, the headlight 30 turns ON without the delay caused by the second threshold value.

In this case, it may happen that the headlight 30 is turned OFF momentarily by noise for example, but is turned ON again instantaneously if the detection result from the illumination detection section 100 becomes smaller than the first threshold value within a predetermined time. The arrangement prevents a problem that the light is turned OFF by noise and will not come back for a prolonged time. Also, the fifth threshold value may be set to a greater value than the second threshold value. This makes it possible to manage a wider variety of noise, with an instantaneous turning ON.

In the embodiments described above, description was made for a case where the controllers 82 and 92 turn ON/OFF the headlight 30 based on a detection result from the illumination detection section 100. However, the invention is not limited to this. For example, there may be an arrangement that one of the controllers 82 and 92 turns ON/OFF the headlight 30 based on the detection result from the illumination detection section 100. In cases where the controller 82 is used to turn ON/OFF the headlight 30 based on the detection result from the illumination detection section 100, the first threshold value through the fourth threshold value will be stored in a memory (not illustrated) in the control unit 74.

In the embodiment described above, the light-receiving window 98 is formed at a corner region near the meter display switching button 108 in the operation surface 90. However, the present invention is not limited to this. The light-receiving window 98 may be formed at any place in the operation surface 90, including any other corner region in the operation surface 90. The selected place, however, dictates where the illumination detection section 100 should be placed in order to receive light from the light-receiving window 98.

In the embodiment described above, description was made for a case where the electrically assisted bicycle 10 includes a display/operation device 40 which has an operation section group 94 and a display section group 96. However, the present invention is not limited to this. The present invention is also applicable to an electrically assisted bicycle in which the operation device and the display device are provided separately from each other.

In the embodiment described above, the display/operation device 40 is attached near the left-hand grip 34 of the handlebar 32. However, the present invention is not limited to this. For example, the display/operation device 40 may be attached near the right-hand grip 36 of the handlebar 32.

The present invention is also applicable to a type of electrically assisted bicycle in which the drive force from the electric motor is directly transferred to the crank shaft 62 to assist rotating movement of the crank shaft 62. Further, the present invention is also applicable to another type of electrically assisted bicycle in which the electric motor is mounted directly to the wheel (the front wheel 28 and/or the rear wheel 52) to assist rotating movement of the wheel.

Also, the present invention is not limited to a standard type electrically assisted bicycle 10 shown in Fig. 1, but is applicable to any type of electrically assisted bicycle such as an electrically assisted bicycle with a child seat, and a sporty-type electrically assisted bicycle.

The present invention being thus far described in terms of preferred embodiments, it is obvious that these may be varied in many ways within the scope of the present invention. The scope of the present invention is only limited by the accompanied claims

## Claims

1. An electrically assisted bicycle (10) including a drive assisting system (56), comprising:
a headlight (30);
an operation device (40) for an operation of the drive assisting system (56), the operation device (40) including an operation surface (90), a light-receiving window (98) formed in the operation surface (90) and configured to allow ambient light to enter, and an illumination detection section (100) configured to detect illumination in a surrounding environment based on the light from the light-receiving window (98);
the operation device (40) is attached to a handlebar (32) and attached near to one grip (34), and the light-receiving window (98) is provided in the operation surface (90) facing upward,
a storage section (93) configured to store a first threshold value regarding the illumination and a second threshold value regarding time; and
a controller (82, 92) for controlling turning ON and turning OFF of the headlight (30);
wherein the controller (82, 92) is configured to turn ON the headlight (30) if the illumination detection section (100) gives a detection result of a value smaller than the first threshold value for a continued time period not shorter than the second threshold value,
wherein the second threshold value is a threshold value for reducing mis-activation of the headlight (30) caused by covering of the light-receiving window (98) by a rider operating the operation device (40).

2. The electrically assisted bicycle (10) according to claim 1, wherein the storage section (93) is further configured to store a third threshold value as a threshold value which regards the illumination and is greater than the first threshold value, and
the controller (82, 92) is configured to turn OFF the headlight (30) under a condition that the detection result of the illumination detection section (100) is greater than the third threshold value.

3. The electrically assisted bicycle (10) according to claim 2, wherein the storage section (93) is further configured to store a fourth threshold value regarding time, and
the controller (82, 92) is configured to turn OFF the headlight (30) if a time period for which the detection result from the illumination detection section (100) exceeds the third threshold value continues for a time period not shorter than the fourth threshold value.

4. The electrically assisted bicycle (10) according to claim 3, wherein the fourth threshold value is greater than the second threshold value.

5. The electrically assisted bicycle (10) according to one of claims 1 through 4, wherein the second threshold value is not shorter than 0.3 seconds.

6. The electrically assisted bicycle (10) according to one of claims 1 through 5, wherein the operation device (40) includes a plurality of operation sections (94).

7. The electrically assisted bicycle (10) according to claim 6, wherein at least one of the operation sections (94) includes an input section for an inputting operation performed while the bicycle is moving, and
the light-receiving window (98) is near the input section.

8. A method of controlling a headlight (30) included in an electrically assisted bicycle (10) with a driving assisting system (56) and an operation device (40) for an operation of the drive assisting system (56), the operation device (40) including an operation surface (90), a light-receiving window (98) formed in the operation surface (90) and configured to allow ambient light to enter, and an illumination detection section (100) configured to detect illumination in a surrounding environment based on the light from the light-receiving window (98), the operation device (40) being attached to a handlebar (32) near to one grip (34), and the light-receiving window (98) being provided in the operation surface (90) facing upward, the method comprising the steps of:
detecting illumination in a surrounding environment;
comparing the detected illumination with a first threshold value; and
turning ON the headlight (30) if the detected illumination has a value smaller than the first threshold value for a continued time period not shorter than a second threshold value, wherein the step of detecting illumination in a surrounding environment includes the steps of: allowing ambient light to enter the light-receiving window (98) formed in the operation surface (90) of the operation device (40) of the electrically assisted bicycle (10); and detecting illumination in a surrounding environment based on the light from the light-receiving window (98) with the illumination detection section (100) of the operation device (40),
wherein the second threshold value is a threshold value for reducing mis-activation of the headlight (30) caused by covering of the light-receiving window (98) by a rider operating the operation device (40).

9. The method of controlling a headlight (30) according to claim 8, wherein the step of comparing the detected illumination with the first threshold value involves comparing the detected illumination with a first threshold value stored in a storage section (93) of the operation device (40).

10. The method of controlling a headlight (30) according to claim 9, wherein the step of turning ON the headlight (30) involves a controller (82, 92) turning ON the headlight (30) if the illumination detection section (100) gives a detection result of a value smaller than the first threshold value for a continued time period not shorter than the second threshold value, which is also stored in the storage section (93).

11. The method of controlling a headlight (30) according to any one of claims 8 to 10, further comprising the step of turning OFF the headlight (30) with the controller (82, 92) under a condition that the detection result of the illumination detection section (100) is greater than a third threshold value, which is stored in the storage section (93).

12. The method of controlling a headlight (30) according to claim 11, further comprising the step of turning OFF the headlight (30) with the controller (82, 92) if a time period for which the detection result from the illumination detection section (100) exceeds the third threshold value continues for a time period not shorter than a fourth threshold value, which is stored in the storage section (93), wherein the fourth threshold value is preferably greater than the second threshold value.

13. The method of controlling a headlight (30) according to any one of claims 8 to 12, wherein the second threshold value is not shorter than 0.3 seconds.

## Patentansprüche

1. Elektrisch unterstütztes Fahrrad (10), das ein Fahr-Unterstützungssystem (56), enthält, und umfasst:
einen Scheinwerfer (30);
eine Betätigungsvorrichtung (40) für eine Betätigung des Fahr-Unterstützungssystems (56), wobei die Betätigungsvorrichtung (40) eine Betätigungsfläche (90), ein Licht-Empfangsfenster (98), das in der Betätigungsfläche (90) ausgebildet und so ausgeführt ist, dass es Umgebungslicht eintreten lässt, sowie einen Beleuchtungs-Erfassungsabschnitt (100) einschließt, der so ausgeführt ist, dass er Beleuchtung in einem umgebenden Umfeld auf Basis des Lichtes von dem Licht-Empfangsfenster (98) erfasst;
wobei die Betätigungsvorrichtung (40) an einer Lenkstange (32) angebracht und in der Nähe eines Griffs (34) angebracht ist, und das Licht-Empfangsfenster (98) in der Betätigungsfläche (90) nach oben gerichtet ist,
einen Speicherungsabschnitt (93), der so ausgeführt ist, dass er einen ersten Schwellenwert bezüglich der Beleuchtung und einen zweiten Schwellenwert bezüglich der Zeit speichert; sowie
eine Steuerungseinrichtung (82, 92) zum Steuern von AN- und AB-Schalten des Scheinwerfers (30);
wobei die Steuerungseinrichtung (82, 92) so ausgeführt ist, dass sie den Scheinwerfer (30) AN schaltet, wenn der Beleuchtungs-Erfassungsabschnitt(100) ein Erfassungsergebnis mit einem Wert liefert, der über einen durchgehenden Zeitraum, der nicht unter dem zweiten Schwellenwert liegt, unter dem ersten Schwellenwert liegt,
wobei der zweite Schwellenwert ein Schwellenwert zum Reduzieren von Fehlaktivierung des Scheinwerfers (30) ist, die durch Abdecken des Licht-Empfangsfensters (98) durch einen die Betätigungsvorrichtung (40) betätigenden Fahrer verursacht wird.

2. Elektrisch unterstütztes Fahrrad (10) nach Anspruch 1, wobei der Speicherungsabschnitt (93) des Weiteren so ausgeführt ist, dass er einen dritten Schwellenwert als einen Schwellenwert speichert, der die Beleuchtung betrifft und über dem ersten Schwellenwert liegt, und
die Steuerungseinrichtung (82, 92) so ausgeführt ist, dass sie den Scheinwerfer (30) unter einer Bedingung dahingehend AB schaltet, dass das Erfassungsergebnis des Beleuchtungs-Erfassungsabschnitts (100) über dem dritten Schwellenwert liegt.

3. Elektrisch unterstütztes Fahrrad (10) nach Anspruch 2, wobei der Speicherungsabschnitt (93) des Weiteren so ausgeführt ist, dass er einen vierten Schwellenwert bezüglich der Zeit speichert, und
die Steuerungseinrichtung (82, 92) so ausgeführt ist, dass sie den Scheinwerfer (30) AB schaltet, wenn eine Zeitspanne, über die das Erfassungsergebnis von dem Beleuchtungs-Erfassungsabschnitt(100) den dritten Schwellenwert überschreitet, über eine Zeitspanne andauert, die nicht unter dem vierten Schwellenwert liegt.

4. Elektrisch unterstütztes Fahrrad (10) nach Anspruch 3, wobei der vierte Schwellenwert über dem zweiten Schwellenwert liegt.

5. Elektrisch unterstütztes Fahrrad (10) nach einem der Ansprüche 1 bis 4, wobei der zweite Schwellenwert nicht kürzer ist als 0,3 Sekunden.

6. Elektrisch unterstütztes Fahrrad (10) nach einem der Ansprüche 1 bis 5, wobei die Betätigungsvorrichtung (40) eine Vielzahl von Betätigungsabschnitten (94) einschließt.

7. Elektrisch unterstütztes Fahrrad (10) nach Anspruch 6, wobei wenigstens einer der Betätigungsabschnitte (94) einen Eingabe-Abschnitt für eine Eingabebetätigung enthält, die durchgeführt wird, während sich das Fahrrad bewegt, und
das Licht-Empfangsfenster (98) sich in der Nähe des Eingabeabschnitts befindet.

8. Verfahren zum Steuern eines Scheinwerfers (30), der in einem elektrisch unterstützten Fahrrad (10) mit einem Fahr-Unterstützungssystem (56) und einer Betätigungsvorrichtung (40) für eine Betätigung des Fahr-Unterstützungssystems (56) enthalten ist, wobei die Betätigungsvorrichtung (40) eine Betätigungsfläche (90), ein Licht-Empfangsfenster (98), das in der Betätigungsfläche (90) ausgebildet und so ausgeführt ist, dass es Umgebungslicht eintreten lässt, sowie einen Beleuchtungs-Erfassungsabschnitt (100) einschließt, der so ausgeführt ist, dass er Beleuchtung in einem umgebenden Umfeld auf Basis des Lichtes von dem Licht-Empfangsfenster (98) erfasst; wobei die Betätigungsvorrichtung (40) an einer Lenkstange (32) in der Nähe eines Griffs (34) angebracht ist, und das Licht-Empfangsfenster (98) in der Betätigungsfläche (90) nach oben gerichtet ist,
wobei das Verfahren die folgenden Schritte umfasst:
Erfassen von Beleuchtung in einem umgebenden Umfeld;
Vergleichen der erfassten Beleuchtung mit einem ersten Schwellenwert; und
AN-Schalten des Scheinwerfers (30), wenn die erfasste Beleuchtung einen Wert hat, der über einen durchgehenden Zeitraum, der nicht unter einem zweiten Schwellenwert liegt, unter dem ersten Schwellenwert liegt,
wobei der Schritt des Erfassens von Beleuchtung in einem umgebenden Umfeld die folgenden Schritte einschließt:
Zulassen, dass Umgebungslicht in das in der Betätigungsfläche (90) der Betätigungsvorrichtung (40) des elektrisch unterstützten Fahrrads (10) ausgebildete Licht-Empfangsfenster (98) eintritt; und
Erfassen von Beleuchtung in einem umgebenden Umfeld auf Basis des Lichtes von dem Licht-Empfangsfenster (98) mit dem Beleuchtungs-Erfassungsabschnitt(100) der Betätigungsvorrichtung (40).

9. Verfahren zum Steuern eines Scheinwerfers (30) nach Anspruch 8, wobei der Schritt des Vergleichens der erfassten Beleuchtung mit dem ersten Schwellenwert Vergleichen der erfassten Beleuchtung mit einem in einem Speicherungsabschnitt (93) der Betätigungsvorrichtung (40) gespeicherten ersten Schwellenwert umfasst.

10. Verfahren zum Steuern eines Scheinwerfers (30) nach Anspruch 9, wobei der Schritt des AN-Schaltens des Scheinwerfers (30) einschließt, dass eine Steuerungseinrichtung (82, 92) den Scheinwerfer (30) AN schaltet, wenn der Beleuchtungs-Erfassungsabschnitt (100) ein Erfassungsergebnis mit einem Wert liefert, der über einen durchgehenden Zeitraum, der nicht unter dem zweiten Schwellenwert liegt, der ebenfalls in dem Speicherungsabschnitt (93) gespeichert ist, unter dem ersten Schwellenwert liegt.

11. Verfahren zum Steuern eines Scheinwerfers (30) nach einem der Ansprüche 8 bis 10, das des Weiteren den Schritt des AB-Schaltens des Scheinwerfers (30) mit der Steuerungseinrichtung (82, 92) unter einer Bedingung dahingehend umfasst, dass das Erfassungsergebnis des Beleuchtungs-Erfassungsabschnitts (100) über einem dritten Schwellenwert liegt, der in dem Speicherungsabschnitt (93) gespeichert ist.

12. Verfahren zum Steuern eines Scheinwerfers (30) nach Anspruch 11, das des Weiteren den Schritt des AB-Schaltens des Scheinwerfers (30) mit der Steuerungseinrichtung (82, 92) umfasst, wenn eine Zeitspanne, über die das Erfassungsergebnis von dem Beleuchtungs-Erfassungsabschnitt (100) den dritten Schwellenwert überschreitet, über eine Zeitspanne andauert, die nicht unter dem vierten Schwellenwert liegt, der in dem Speicherungsabschnitt (93) gespeichert ist, wobei der vierte Schwellenwert vorzugsweise über dem zweiten Schwellenwert liegt.

13. Verfahren zum Steuern eines Scheinwerfers (30) nach einem der Ansprüche 8 bis 12, wobei der zweite Schwellenwert nicht kürzer ist als 0,3 Sekunden.

## Revendications

1. Bicyclette à assistance électrique (10) incluant un système d'assistance à la conduite (56) comprenant :
un bloc optique (30),
un dispositif d'exploitation (40) destiné à l'exploitation du système d'assistance à la conduite (56), le dispositif d'exploitation (40) incluant une surface d'exploitation (90), une fenêtre de réception de lumière (98) formée dans la surface d'exploitation (90) et configurée pour autoriser la pénétration de la lumière ambiante, ainsi qu'une section de détection d'éclairage (100) configurée pour détecter l'éclairage dans le milieu environnant sur la base de la lumière émise par la fenêtre de réception de lumière (98),
le dispositif d'exploitation (40) est fixé à un guidon (32) et il est placé à proximité d'une poignée (34), et la fenêtre de réception de lumière (98) est disposée dans la surface d'exploitation (90) faisant face vers le haut,
une section de stockage (93) configurée pour mémoriser une première valeur de seuil se rapportant à l'éclairage et une deuxième valeur de seuil se rapportant au temps, et
un contrôleur (82, 92) destiné à commander la mise en et hors tension du bloc optique (30),
dans lequel le contrôleur (82, 92) est configuré pour mettre sous tension le bloc optique (30) si la section de détection d'éclairage (100) donne un résultat de détection présentant une valeur plus petite que la première valeur de seuil pendant un intervalle de temps prolongé pas plus court que la deuxième valeur de seuil,
où la deuxième valeur de seuil est une valeur de seuil permettant de réduire le défaut d'activation du bloc optique (30) provoqué par la couverture de la fenêtre de réception de lumière (98) par le cycliste qui manœuvre le dispositif d'exploitation (40).

2. Bicyclette à assistance électrique (10) selon la revendication 1, dans laquelle la section de stockage (93) est en outre configurée pour mémoriser comme valeur de seuil une troisième valeur de seuil qui se rapporte à l'éclairage et qui est supérieure à la première valeur de seuil, et
le contrôleur (82, 92) est configuré pour mettre hors tension le bloc optique (30) à la condition que le résultat de détection de la section de détection d'éclairage (100) soit supérieur à la troisième valeur de seuil.

3. Bicyclette à assistance électrique (10) selon la revendication 2, dans laquelle la section de stockage (93) est en outre configurée pour mémoriser une quatrième valeur de seuil se rapportant au temps, et
le contrôleur (82, 92) est configuré pour mettre hors tension le bloc optique (30) si un intervalle de temps pour lequel le résultat de détection provenant de la section de détection d'éclairage (100) dépasse la troisième valeur de seuil se poursuit pendant un intervalle qui n'est pas supérieur à la quatrième valeur de seuil.

4. Bicyclette à assistance électrique (10) selon la revendication 3, dans laquelle la quatrième valeur de seuil est supérieure à la deuxième valeur de seuil.

5. Bicyclette à assistance électrique (10) selon l'une des revendications 1 à 4, dans laquelle la deuxième valeur de seuil n'est pas plus courte que 0,3 seconde.

6. Bicyclette à assistance électrique (10) selon l'une des revendications 1 à 5, dans laquelle le dispositif d'exploitation (40) inclut une pluralité de sections d'exploitation (94).

7. Bicyclette à assistance électrique (10) selon la revendication 6, dans laquelle aux moins l'une des sections d'exploitation (94) inclut une section d'entrée destinée à une manœuvre d'entrée effectuée alors que la bicyclette se déplace, et
la fenêtre de réception de lumière (98) est proche de la section d'entrée.

8. Procédé de commande d'un bloc optique (30) inclut dans une bicyclette à assistance électrique (10) comportant un système d'assistance à la conduite (56) et un dispositif d'exploitation (40) destinée à l'exploitation du système d'assistance à la conduite (56), le dispositif d'exploitation (40) incluant une surface d'exploitation (90), une fenêtre de réception de lumière (98) formée dans la surface d'exploitation (90) et configurée pour autoriser la pénétration de la lumière ambiante, ainsi qu'une section de détection d'éclairage (100) configurée pour détecter l'éclairage dans le milieu environnant sur la base de la lumière émise par la fenêtre de réception de lumière (98), le dispositif d'exploitation (40) étant fixé à un guidon (32) à proximité d'une poignée (34) et la fenêtre de réception de lumière (98) étant disposée dans la surface de modulation (90) faisant face vers le haut,
le procédé comprenant les étapes suivantes :
la détection de l'éclairage dans le milieu environnant,
la comparaison de l'éclairage détecté à une première valeur de seuil, et
la mise sous tension du bloc optique (30) si l'éclairage détecté présente une valeur plus petite que la première valeur de seuil pendant un intervalle de temps prolongé pas plus court une deuxième valeur de seuil,
dans lequel l'étape de détection de l'éclairage dans le milieu environnant inclut les étapes consistant à :
autoriser la pénétration de la lumière ambiante dans la fenêtre de réception de lumière (98) formée dans la surface d'exploitation (90) du dispositif d'exploitation (40) de la bicyclette à assistance électrique (10), et
détecter l'éclairage dans le milieu environnant sur la base de la lumière émise par la fenêtre de réception de lumière (98) grâce à la section de détection d'éclairage (100) du dispositif d'exploitation (40),
dans lequel la deuxième valeur de seuil est une valeur de seuil permettant de réduire le défaut d'activation du bloc optique (30) provoqué par la couverture de la fenêtre de réception de lumière (98) par la manœuvre du cycliste sur le dispositif d'exploitation (40).

9. Procédé de commande d'un bloc optique (30) selon la revendication 8, dans lequel l'étape de comparaison de l'éclairage détecté avec la première valeur de seuil met en jeu la comparaison de l'éclairage détecté avec une première valeur de seuil mémorisée dans une section de stockage (93) du dispositif d'exploitation (40).

10. Procédé de commande d'un bloc optique (30) selon la revendication 9, dans lequel l'étape de mise sous tension du bloc optique (30) met en jeu un contrôleur (82, 92) mettant sous tension le bloc optique (30) si la section de détection d'éclairage (100) donne un résultat de détection d'une valeur plus petite que la première valeur de seuil pendant un intervalle de temps prolongé qui n'est pas plus court que la deuxième valeur de seuil, qui est également mémorisée dans la section de stockage (93).

11. Procédé de commande d'un bloc optique (30) selon l'une quelconque des revendications 8 à 10, comprenant en outre l'étape de mise hors tension du bloc optique (30) avec le contrôleur (82, 92) à la condition que le résultat de détection de la section de détection d'éclairage (100) soit supérieur à une troisième valeur de seuil qui est mémorisée dans la section de stockage (93).

12. Procédé de commande d'un bloc optique (30) selon la revendication 11, comprenant en outre l'étape de mise hors tension du bloc optique (30) avec le contrôleur (82, 92) si un intervalle de temps pendant lequel le résultat de détection provenant de la section de détection d'éclairage (100) dépasse la troisième valeur de seuil se poursuit pendant un intervalle de temps qui n'est pas plus court que le quatrième valeur de seuil qui est mémorisée dans la section de stockage (93), la quatrième valeur de seuil étant de préférence supérieure à la deuxième valeur de seuil.

13. Procédé de commande d'un bloc optique (30) selon l'une quelconque des revendications 8 à 12, dans lequel la deuxième valeur de seuil n'est pas plus courte que 0,3 seconde.
